# EUROPEAN PATENT APPLICATION

(11) **EP 3 561 989 A1**
(43) Date of publication of application: **30.10.2019**
(21) Application number: 16924342.5
(22) Date of filing: 20.12.2016
(51) Int. Cl.: H02J 7/00

(54) **MICRO-ENERGY COLLECTION METHOD AND DEVICE, AND MICRO-ENERGY SUPPLY DEVICE**

(71) Applicant: Shenzhen Cooperation Technology Co., Ltd., Shenzhen, Guangdong 518000 (CN)
(72) Inventor: HUA, Jianwu, Shenzhen Guangdong 518000 (CN)
(74) Representative: dompatent von Kreisler Selting Werner - Partnerschaft von Patent- und Rechtsanwälten mbB
(86) International application number: PCT/CN2016/111064
(87) International publication number: WO 2018/112748

(57) **Abstract**

A micro-energy collection method and device, and a micro-energy supply device. The micro-energy collection method includes: converting micro-energy in the environment into micro electric energy; and collecting the micro electric energy through a SOC and outputting the micro-energy to an electric energy storage unit. By using the existing integrated chip and equipment to perform segmented collection, collection of micro-energy in the environment and collection of micro-ampere-level current with extremely low power consumption is implemented, a threshold of energy collection unit is reduced, an application range of energy collection is enlarged, an environmental constraint of energy collection is broken through, and an application field of clean energy is expanded.

## Description

### TECHNICAL FIELD

The present invention pertains to the field of electronics, and more particularly to a micro-energy collection method, a micro-energy collection device, and a micro-energy supply device.

### BACKGROUND

Currently, due to huge pollution generated in the conversion process of traditional energy and excessive consumption of primary energy such as petroleum, more and more collisions are generated between the traditional energy source and new type of clean energy source, and a clean energy revolution will certainly occur in the future; however, collection of clean energy is performed mostly from the perspective of improving conversion efficiency and reducing transmission loss, there is still no study on how to reduce the threshold of energy collection, how to increase the application range of energy collection, and how to break through the environmental constraint.

Most of existing energy collection modes aim at solar energy, wind energy and fluid energy, however, as for the solar energy, the wind energy and the fluid energy, high-level energy can only be collected, taking the most widely used solar energy collection as an example, a weak light type photoelectric battery is mostly used in the existing solar energy collection in a weak light environment, this battery uses an amorphous silicon battery cell and has certain photoelectric conversion capability on a light source having the wavelength greater than 780 nm, and may be converted into the current of about 30 µ A; however, the so micro-energy may not even guarantee the power supply requirement of the MCU in the collection circuit, a working current of a MCU reaches dozens of milliamperes, which is equal to thousands of times of the collected current, a resistance of one 1M has a current consumption of 3 µ A; therefore, micro-energy generated by a weak light source may not be collected according to a conventional MPPT (Maximum Power Point Tracking) algorithm or in the manner of DSP (Digital Signal Processor) since the power consumptions of the collection mode and components are too huge, the loss of micro-energy is caused, so that energy collection and application thereof may not be performed in some environments that may generate micro-energy, and the application of many technologies is restrained.

### SUMMARY

An object of the present invention is to provide a micro-energy collection method which aims at solving a problem that high-level energy can only be collected in the related art, which causes the application of a load to be restrained by the environment.

The embodiments of the present invention are implemented in this way: a micro-energy collection method, including following steps of:
converting micro-energy in the environment into micro electric energy; and
collecting the micro electric energy through a SOC and outputting the micro-energy to an electric energy storage unit.

Another object of the embodiments of the present invention is to provide a micro-energy collection device, including:
a conversion unit configured to convert micro-energy in an environment into micro electric energy; and
a collection unit configured to collect the micro electric energy through a SOC and output the micro-energy to an electric energy storage unit, where the collection unit is connected between the conversion unit and the electric energy storage unit.

Another object of the present invention is to provide a micro-energy supply device including the aforesaid micro-energy collection device.

According to the embodiment of the present invention, a segmented collection is performed according to the existing IC (Integrated Circuit) and equipment, collection of micro-energy in the environment with extremely low power consumption is implemented, the collection of current of micro-ampere level is realized, the technique shortage in the related art is remedied, the threshold of the energy collection unit is reduced, the application range of energy collection is enlarged, the environmental constraint of energy collection is broken through, and the application field of clean energy is expanded.

### BRIEF DESCRIPTION OF THE DRAWINGS

FIG. 1 illustrates a flowchart structural diagram of a micro-energy collection method provided by an embodiment of the present invention;
FIG. 2 illustrates a flowchart structural diagram of step 102 in the micro-energy collection method provided by the embodiment of the present invention;
FIG. 3 illustrates a structural diagram of a micro-energy collection device provided by an embodiment of the present invention;
FIG. 4 illustrates an exemplary structural diagram of a micro-energy collection device provided by an embodiment of the present invention;

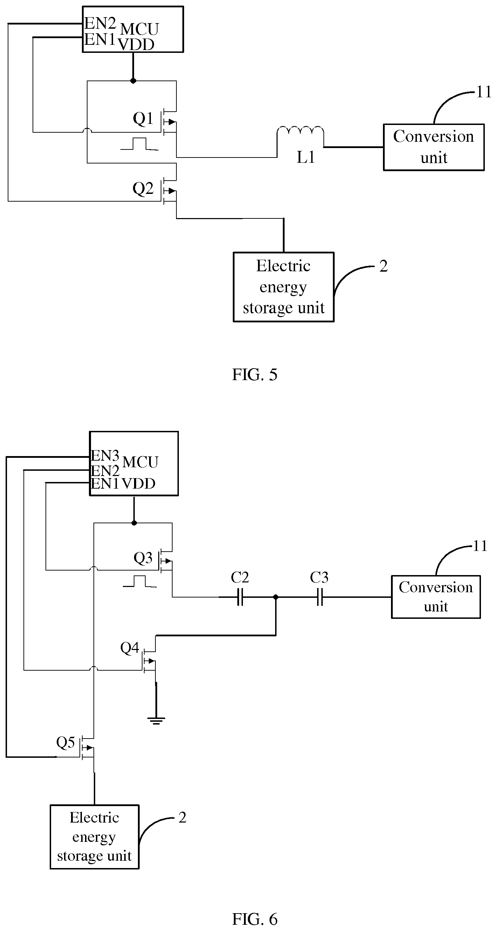

FIG. 5 illustrates an exemplary circuit diagram of a detection circuit in the micro-energy collection device provided by an embodiment of the present invention;
FIG. 6 illustrates another exemplary circuit diagram of the detection circuit in the micro-energy collection device provided by the embodiment of the present invention; and

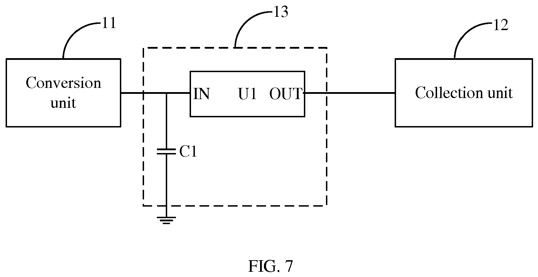

FIG. 7 illustrates an exemplary circuit diagram of a voltage reset unit in the micro-energy collection device provided by the embodiment of the present invention.

### DESCRIPTION OF THIS EMBODIMENTS

In order to make the purpose, the technical solution and the advantages of the present invention be clearer and more understandable, the present invention is further described in detail below with reference to accompanying figures and embodiments. It should be understood that the specific embodiments described herein are only intended to illustrate but not to limit the present invention. In addition, the technical features involved in the various embodiments of the present invention below may be combined as long as they don't conflict with each other.

According to the embodiment of the present invention, a segmented collection is performed according to the existing IC (Integrated Circuit) and equipment, collection of micro-energy in the environment with extremely low power consumption is implemented, the collection of current of micro-ampere level is realized, the technique shortage in the related art is remedied, the threshold of the energy collection unit is reduced, the application range of energy collection is enlarged, the environmental constraint of energy collection is broken through, and the application field of clean energy is expanded.

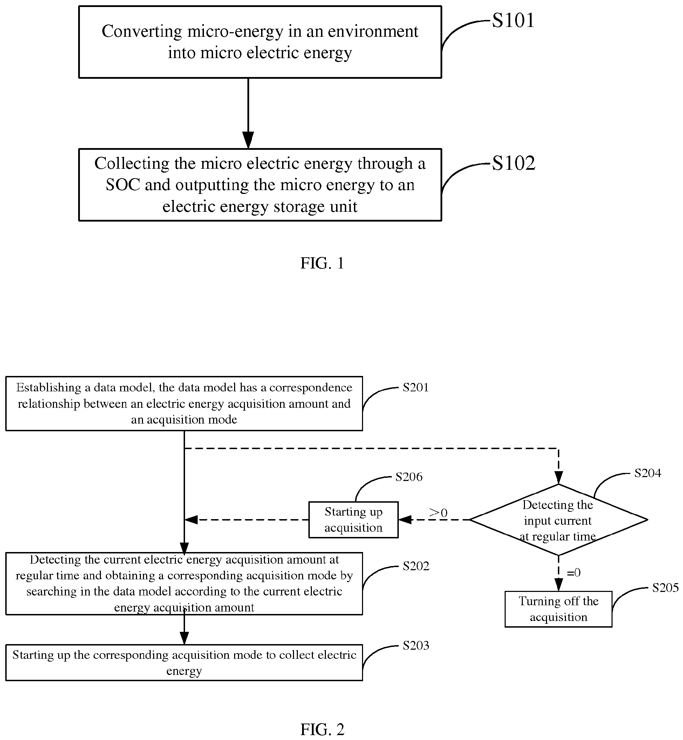

FIG. 1 illustrates a flowchart structural block diagram of a micro-energy collection method provided by an embodiment of the present invention, for convenience of description, the part related to the present invention is merely shown.

As an embodiment of the present invention, this method may be applied to collection of light energy, wind energy, fluid energy and pressure kinetic energy, and may perform a remote wireless control in combination with the internet of things or a carrier, and perform an intelligent control by utilizing a system of an intelligent terminal.

The micro-energy collection method includes the following steps:
in step 101, converting micro-energy in the environment into micro electric energy;
In this embodiment of the present invention, the micro-energy in the environment may be converted into the micro electric energy through a collection unit such as an amorphous silicon cell, a pressure sensor, a pressure transducer, a temperature difference thermal generator, a soil ion generator, and the like.

In step 102, collecting the micro electric energy through a SOC and outputting the collected micro electric energy to an electric energy storage unit.

As an embodiment of the present invention, it is possible to utilize a MCU and establish the SOC on the MCU so as to collect the micro electric energy. It is worth noting that, the SOC in the aforesaid step of collecting micro electric energy through a SOC generally refers to a universal MCU, a system which is established on the MCU and have a specific function, and external equipment necessary for the application of the MCU, the SOC establishes the system on the universal MCU, so that the universal MCU has the specific function, and the optimization function is much easier, and the development period is shorter.

As a preferred embodiment of the present invention, the method may further include the following steps after the step 101 and before the step 102:
performing a voltage reset processing on the micro electric energy to convert unstable micro electric energy into intermittent output energy such as a pulse signal having certain pulse width.

In this embodiment of the present invention, the waveform generated by the collection unit is usually unstable energy, if the waveform is directly output to the collection unit for collection, frequent restarting of the collection unit may be caused due to the fact that the input current or the input voltage is too low; however, the collection unit usually has relatively larger power consumption when it is restarted every time; as a consequence, the collected energy signals are converted into pulse signals through the voltage reset unit, such that the collection unit may work very stably, restarting times are greatly reduced, and hence the power consumption due to frequent restarting is reduced.

As a preferred embodiment of the present invention, in combination with FIG. 2, the step of collecting the micro electric energy through a SOC in step 102 may particularly include:
in step 201, establishing a data model, where the data model has a correspondence relationship between the electric energy collection amount and the collection mode;
in step 202, proactively detecting the current electric energy collection amount at regular time or being passively woken up to detect the current electric energy collection amount, and obtaining a corresponding collection mode by searching in the data model according to the current electric energy collection amount, where the collection mode at least includes a low power consumption collection mode and a high-efficiency collection mode.

In the embodiment of the present invention, a clock with unchanged or changed frequency may be set, and a timing detection is performed according to the preset clock proactively and at regular time; when the time detection is not performed, an electric energy collection amount detection module may enter a dormant state to save energy consumption; of course, the electric energy collection amount detection module may be enabled to be kept in the dormant state, performs detection once after it is woken up, and then continues to restore to the dormant state to save energy consumption after the detection.

Preferably, waking up the electric energy collection amount detection module may be implemented by detecting an electric charge or a voltage in the electric energy storage unit through an electric amount meter or a comparator, and sending out an alarm signal to awake the electric energy collection amount detection module through the electric amount meter or the comparator, when the electric charge or the voltage in the electric energy storage unit reaches a preset threshold value.

It is worth noting that, the data model includes multiple parameters having correspondence relationship with each other, searching in the data module in step 202 may either be directly searching in the data module, or be searching in the data module through a function relationship or a call relationship, another corresponding parameter may be searched according to one parameter and the correspondence relationship thereof.

In step 203, starting up a corresponding collection mode to collect micro-energy.

The data model is configured to count and create a database according to a variable rule of input/output of the electric energy collection amount in combination with the environment parameters measured in real time, and create a correspondence relationship function between the electric energy collection amount and the collection mode through minimum calculation amount, so that the maximum power point of later time may be predicted according to the current environment parameters, and the corresponding collection mode may be executed by calling the function.

Taking solar energy as an example, since the area of the used solar cell is stable, the curve of power generated by different light intensities is known, then, the data is tested in different environments, the formula and the data corresponding to the data are counted, and a simple database or data table is created, the maximum power point and the collection mode which are close to the actual situation are predicted by searching in the database or the data table according to the environment parameters, during actual use.

As a preferred embodiment of the present invention, in step 202, the method of detecting the current electric energy collection amount at regular time may be implemented by a first approach or by a second approach, and may also be implemented by the combination of the first approach and the second approach preferably.

Particularly, the first approach includes the following steps: detecting input current/input voltage/input charge at regular time, and taking current input current or current input voltage or current input charge as the electric energy collection amount, where the input current or the input voltage or the input charge is converted from micro-energy in the environment.

Particularly, the second approach includes the following steps: detecting the voltage of the electric energy storage unit at regular time, and taking the voltage as the electric energy collection amount.

For example, the current collection mode may be determined by searching in the database according to the voltage in the current electric energy storage unit, a detection frequency may be reduced if the current electric amount is low, that is, the collection mode is not changed frequently, so that the power consumption is reduced;
The detection frequency may be increased if the current electric amount is high, that is, the collection mode is continuously switched to be more suitable for the current environment, so that the collection efficiency is improved.

Regarding the detection using the first approach in combination with the second approach, which is described in detail below:
In a dim light stage and a weak light stage, a low power consumption collection mode is applied, since the collection amount is tiny, the power consumption required for detection needs to be provided by the electric energy storage unit, for this reason, it is more appropriate to apply the second approach for detection; however, the high efficiency mode is applied in a medium light mode and in a hard light mode, since the collection amount is larger, the power consumption required for detection may be provided by the current collection amount, therefore, it is more appropriate to apply the first approach for detection.

In addition, in the two collection modes in step 202, the micro electric energy may be collected according to a preset power in the low power consumption collection mode;
In the embodiment of the present invention, for example, in the weak light stage corresponding to the low power consumption collection mode, at this moment, the current rises as compared to that in the dim light stage, the MCU still needs to sleep and operates in a sleep mode, thus, an awakening frequency may be accelerated by controlling the frequency and the pulse width of the collected boosted pulses.

Collection may be controlled by using MPPT (Maximum Power-Point Tracking) in the high-efficiency collection mode, an optimal parameter and optimal power consumption balance voltage point is selected according to the MPPT, and the micro electric energy is collected according to the optimal parameter and the optimal power consumption balance voltage point.

As an embodiment of the present invention, the MPPT is configured to determine an optimal power consumption balance voltage point by calculation according to the required amount of coulombic electric charge consumed by an inductor of the collection circuit, the required amount of coulombic electric charge from awakening up the MCU to completing collection processing, and the amount of electric charge generated by a solar cell panel.

Moreover, the optimal parameters may be preset or determined by test and is assigned to a collection system through a network or in a local preset mode, during actual use.

A dynamic control is performed by the MPPT in combination with a modeling collection curve, and the modeling collection curve is obtained by an actual test according to an operational environment, and may also be obtained by the dynamic control, that is, by increasing collected environment data and searching in the database, in this way, the collection mode more suitable for the current environment may be predicted. In this collection mode, energy collection is performed according to predetermined PWM (Pulse Width Modulation)/PDM (Pulse Duration Modulation).

As an embodiment of the present invention, the MCU may be woken up to work and perform the detection through the high electric level and the low electric level of the I/O (Input and Output) port under the environment of dim light (the collection energy is low); waking at regular time may be adopted under the environment of strong light (the collection energy is high).

Preferably, the step of collecting micro electric energy through the SOC in the step 102 may further include:
in step 204, detecting input current at regular time;
executing step 205 of terminating the collection when the input current is equal to zero; or
as an alternative, executing step 206 of starting up the collection when the input current is greater than zero or than a preset threshold value;
the aforesaid input current is converted from the micro-energy in the environment.
It is worth noting that steps 204-206 should be performed before the step 202, however, whether the steps 204-206 are executed before or after the step 201 is not limited.

According to the method in the embodiment mentioned above, a segmented collection of light energy is described below:
Firstly, the segmented collection of light energy is divided into five stages according to the amount of energy that can be collected, and different collection modes are adopted correspondingly aiming at the five stages, the detection frequency is controlled mainly depending on the amount of stored electric energy in the dim light stage and in the weak light stage, and a corresponding collection mode is selected; thus, the primary objective is to limit the detection frequency and to keep low power consumption; however, in the medium light stage and the strong light stage, the objective is to collect energy as much as possible, so that a frequent detection is needed, and it needs to switch into the collection mode with the highest efficiency currently to perform the collection.

In the dark stage, no energy is collected in this stage, so that the energy collection is in a closed state, the SOC is in a dormant state, that is, the SOC is in a standby mode with the lowest power consumption.

In the dim light stage, energy may be collected in the dim light phase, however, the collected energy such as the energy less than 1 micro-ampere is very weak and is difficult to be utilized, at this time, a small capacitance may be arranged to store the extremely micro-energy, firstly, the solar cell panel charges the capacitance directly, when a voltage across the capacitance is higher than an electric potential of the high level of the I/O port of the MCU, the collection system is awakened again to perform the collection one time, so that the energy stored in the small capacitance is collected and stored in the electric energy storage unit at one time.

The selection of capacitance value of a small capacitance may be calculated according to the approach as follows:
consumption calculation, the amount of coulombic electric charge which needs to be consumed by an inductor of the collection circuit is calculated first. Then, the amount of coulombic electric charge collected by the capacitance when the electric potential of the capacitance is dropped from an electric potential of a collection starting point to an electric potential of the collection end point is calculated. When the amount of the collected electric charge (in coulomb) is greater than 1.5 times of the amount of the consumed electric charge, the small capacitance value is set according to 2 to 3 times of the capacity.

In the weak light stage, the current collected at the moment slightly rises, however, the MCU still needs to sleep and operate in the sleep mode, but the awakening frequency is greatly increased. The collection method is similar to that in the dim light stage, and it only needs to increase the frequency and the pulse width of the boosted pulses for the control of collection, that is, switching from the original collection with fixed frequency into the collection with variable frequency.

It is worth noting that, regarding judgment of adjacent stages, whether it is in the dim light stage or in the weak light stage currently is judged by calculating the awakening frequency, or alternatively whether it needs to switch into the weak light stage or not is judged by detecting an electric level value at a capacitance end in the collection mode in the dim light stage.

In the medium light stage, the input current may ensure that the MCU can operate in a low speed mode in this stage, the collection performance is relatively high, some MPPT methods may be used for the control of collection to improve the efficiency of collection properly. At the moment, a timer may be used to awake the MCU, the electric level value of input amount is obtained through a timing detection mode, the frequencies of high electric levels and low electric levels are calculated, and a collection strategy is planned in the manner of searching in the database.

In the strong light stage, the values of the input voltage, the output voltage, the current and the electric amount may be more finely collected at this stage, and a more accurate MPPT value is determined according to these values, a PWM frequency is collected more efficiently, and more energy is obtained.

According to the embodiment of the present invention, the segmented collection is performed according to existing IC (Integrated Circuit) and equipment, collection of micro-energy in the environment with extremely low power consumption is implemented, the collection of current of micro-ampere level is realized, the technique shortage in the related art is remedied, the threshold of the energy collection unit is reduced, the application range of energy collection is enlarged, the environmental constraint of energy collection is broken through, and the application field of clean energy is expanded.

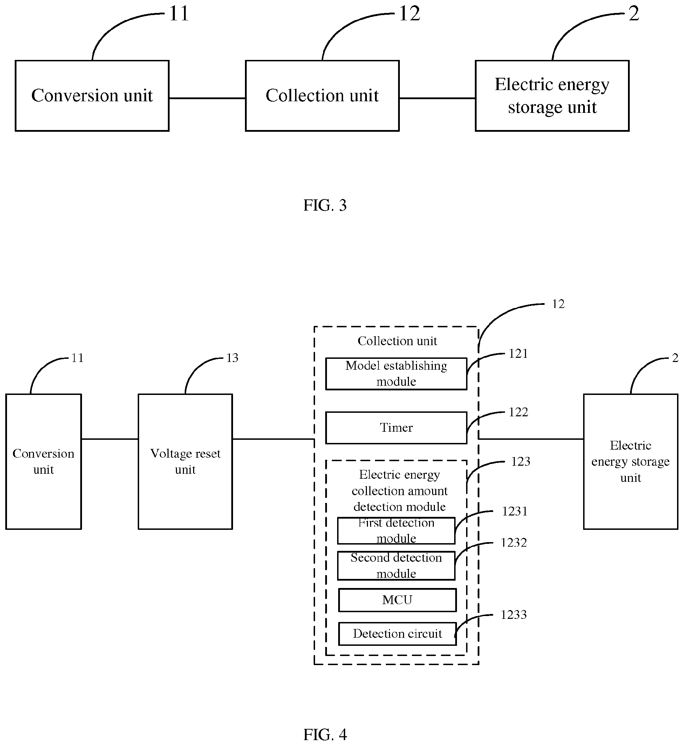

FIG. 3 illustrates a structure of a micro-energy collection device provided by an embodiment of the present invention, for convenience of description, only the part related to the present invention is described.

As an embodiment of the present invention, the micro-energy collection device is connected with an electric energy storage unit 2 and includes:
a conversion unit 11 configured to convert micro-energy in the environment into micro electric energy; and
a collection unit 12 configured to collect the micro electric energy through a SOC and output the micro-energy to the electric energy storage unit 2, where the collection unit 12 is connected between the conversion unit 11 and the electric energy storage unit 2.

Preferably, the collection unit 12 is any one selected from a group including an amorphous silicon cell, a pressure sensor, a pressure transducer, a temperature difference thermal generator and a soil ion generator.

Preferably, the collection unit 12 is MCU and is implemented by establishing SOC (System on Chip) on MCU. It is worth noting that, the SOC in the aforesaid step of collecting micro electric energy through the SOC generally refers to a universal MCU, a system having a specific function and external equipment necessary for applications of the MCU, the SOC establishes the system on the universal MCU, such that the universal MCU has the specific function, and the optimization function is much easier, and the development period is shorter.

The collection unit 12 further includes:
a model establishing module 121 configured to establish a data model, where the data model has a correspondence relationship between an electric energy collection amount and a collection mode;
a timer 122 configured to generate a clock signal; and
an electric energy collection amount detection module 123 configured to detect the current electric energy collection amount at regular time according to the clock signal, to obtain a corresponding collection mode by searching in the data model according to the current electric energy collection amount, and to start up the corresponding collection mode to obtain micro-energy; where the collection mode at least includes a low power consumption collection mode and a high-efficiency collection mode.

In the embodiment of the present invention, a clock with unchanged or changed frequency may be set, and the timing detection is performed according to the preset clock proactively and at regular time; when the time detection is not performed, an electric energy collection amount detection module may enter a dormant state to save energy consumption; of course, the electric energy collection amount detection module may be enabled to be kept in the dormant state, and performs detection once after it is woken up, and then continues to restore to the dormant state to save energy consumption after the detection.

Preferably, waking up the electric energy collection amount detection module may be implemented by detecting an electric charge or a voltage in the electric energy storage unit through an electric amount meter or a comparator, and sending out an alarm signal to awake the electric energy collection amount detection module through the electric amount meter or the comparator, when the electric charge or the voltage in the electric energy storage unit reaches a preset threshold value.

It is worth noting that, the data model includes multiple parameters having correspondence relationship with each other, searching in the data module in step 202 may either be directly searching in the data module, or be searching in the data module through a function relationship or a call relationship, so that another corresponding parameter may be searched through one parameter and the correspondence relationship thereof.

As an embodiment of the present invention, the low power consumption collection mode is configured to collect the micro electric energy through the preset power;

In the high efficiency collection mode, MPPT (Maximum Power Point Tracking) is used to control collection, the optimal parameter and optimal power consumption balance voltage point is selected according to the MPPT, and the micro electric energy is collected according to the optimal parameter and optimal power consumption balance voltage point.

Further, the electric energy collection amount detection module 123 includes at least one selected from a group of detection modules including:
a first detection module 1231 configured to detect an input current or an input voltage or an input charge at regular time, and take current input current or current input voltage or current input charge as the electric energy collection amount, where the input current or the input voltage or the input charge is converted from the micro-energy in the environment; and
a second detection module 1232 configured to detect a voltage of the electric energy storage unit 2 and take the voltage as the electric energy collection amount at regular time.
As a preferred embodiment, the electric energy collection amount detection module 123 further includes a MCU and a detection circuit 1233;
the detection circuit 1233 includes:
   a first switching transistor Q1, a second switching transistor Q2 and an inductor L1;
   both a current input of the first switching transistor Q1 and a current input of the second switching transistor Q2 are connected with a power terminal VDD of the SOC in the MCU, a current output of the first switching transistor Q1 is connected with the conversion unit 11 through the inductor L1, a control terminal of the first switching transistor is connected with a first output enable terminal EN1 of the SOC in the MCU, and a current output of the second switching transistor Q2 is connected with the electric energy storage unit 2, and a control terminal of the second switching transistor Q2 is connected with a second output enable terminal EN2 of the SOC in the MCU;
As a preferred embodiment of the present invention, the inductor L1 is an external device of the MCU; the first switching transistor Q1 and the second switching transistor Q2 may either be arranged outside the MCU or be implemented by switching transistors inside the MCU, the detection circuit 1233 which is consisted of the switching transistors inside the MCU has much lower power consumption.

In the case that the first switching transistor Q1 and the second switching transistor Q2 are arranged outside the MCU, these switching transistors are connected with an output enable terminal of the SOC through a pin of the MCU;
In the case that the first switching transistor Q1, the second switching transistor Q2 are switching transistors inside the MCU, two switching transistors which have greater currents are used to be connected with an enable terminal of the SOC.

As an embodiment of the present invention, the detection circuit 123 may further include:
a third switching transistor Q3, a fourth switching transistor Q4, a fifth switching transistor Q5, a capacitance C2 and a capacitance C3;
where a current input of the third switching transistor Q3 and a current input of the fifth switching transistor Q5 are commonly connected with a power terminal of the SOC in the MCU, a current output of the third switching transistor Q3 is connected with one end of the capacitance C2, the other end of the capacitance C2 is connected with one end of the capacitance C3, and the other end of the capacitance C3 is connected with the conversion unit 11; the other end of the capacitance C2 is further connected with a current input of the fourth switching transistor Q4, the current output of the fourth switching transistor Q4 is grounded, the current output of the fifth switching transistor Q5 is connected with the electric energy storage unit 2, a control terminal of the third switching transistor Q3 is connected with a first output enable terminal EN1 of the SOC in the MCU, a control terminal of the fourth switching transistor Q4 is connected with a second output enable terminal EN2 of the SOC in the MCU, and a control terminal of the fifth switching transistor Q5 is connected with a third output enable terminal EN3 of the SOC in the MCU.

Similarly, the third switching transistor Q3, the fourth switching transistor Q4 and the fifth switching transistor Q5 may be arranged inside or outside the MCU.

Preferably, the first switching transistor Q1, the second switching transistor Q2, the third switching transistor Q3, the fourth switching transistor Q4 and the fifth switching transistor Q5 may be implemented by MOS (Metal Oxide Semiconductor) transistors having lower power consumption.

As a preferred embodiment of the present invention, the collection unit 12 may further include:
an input current detection unit 124 configured to detect an input current at regular time and terminate collection in the case that the input current is equal to zero, or alternatively establish a connectivity relation between the conversion unit and the collection unit and start up the collection in the case that the input current is larger than zero or than a preset threshold value;
where the input current is converted from the micro-energy in the environment.

The one-way conduction device is configured to turn off the collection in the case that the input current is equal to zero, and to start up the collection in the case that the input current is greater than a preset threshold value; where the one-way conduction device is connected between the conversion unit and the collection unit; or
as an alternative, the one-way conduction device is configured to detect the input current at regular time, to turn off the collection in the case that the input current is equal to zero, and to start up the collection in the case that the input current is greater than zero or the preset threshold value.

As a preferred embodiment of the present invention, the micro-energy collection device may further include:
a voltage reset monitoring unit 13 configured to perform a voltage switching processing on the micro electric energy to convert unstable micro electric energy such as a pulse signal having certain pulse width into intermittent output energy, where the voltage reset monitoring unit 13 is connected between the conversion unit 11 and the collection unit 12.

In this embodiment of the present invention, said voltage switching processing particularly refers to comparing micro electric energy with a preset threshold value and outputting a high electric level in the case that the micro electric energy is greater than the preset threshold value, or alternatively outputting a low electric level in the case that the micro electric energy is smaller than the threshold value; as a consequence, the output energy is intermittent signal.

Preferably, the voltage reset monitoring unit 13 includes:
a voltage reset monitoring chip U1 and a capacitance C1;
an input IN of the voltage reset monitoring chip U1 is connected with the conversion unit 11, the input IN of the voltage reset monitoring chip U1 is grounded through the capacitance C1, either, and an output OUT of the voltage reset monitoring chip U1 is connected with the collection unit 12.

Regarding the implementation principle of the micro-energy collection device and the examples of collection in this embodiment, reference can be made to the relevant descriptions in the embodiment of the micro-energy collection method.

Another object of the embodiments of the present invention is to provide a micro-energy supply device including the aforesaid micro-energy collection device.

According to the embodiment of the present invention, a segmented collection is performed according to the existing IC (Integrated Circuit) and equipment, collection of micro-energy in the environment with extremely low power consumption is implemented, the collection of current of micro-ampere level is realized, the technique shortage in the related art is remedied, the threshold of the energy collection unit is reduced, the application range of energy collection is enlarged, the environmental constraint of energy collection is broken through, and the application field of clean energy is expanded.

The foregoing only describes preferable embodiments of the present invention and is not intended to limit the present invention. Any modification, equivalent replacement, improvement, and the like, which are made within the spirit and the principle of the present invention, should all be included in the protection scopes of the present invention.

## Claims

1. A micro-energy collection method, **characterized in that**, the method comprises following steps of:
converting micro-energy in an environment into micro electric energy; and
collecting the micro electric energy through a SOC and outputting the micro electric energy to an electric energy storage unit.

2. The method according to claim 1, **characterized in that**, the step of collecting the micro electric energy through a SOC comprises:
establishing a data model, wherein the data model has a correspondence relationship between an electric energy collection amount and a collection mode;
proactively detecting current electric energy collection amount at regular time or being woken up passively to detect the current electric energy collection amount, and obtaining a corresponding collection mode by searching in the data model according to the current electric energy collection amount, wherein the collection mode at least comprises a low power consumption collection mode and a high-efficiency collection mode; and
starting up the corresponding collection mode to collect micro-energy.

3. The method according to claim 2, **characterized in that**, the step of proactively detecting the current electric energy collection amount at regular time comprises at least one selected from a group of approaches including:
a first approach of detecting an input current or an input voltage or an input charge at regular time, and taking current input current or current input voltage or current input charge as the electric energy collection amount, wherein the input current or the input voltage or the input charge is converted from the micro-energy in the environment; and
a second approach of detecting a voltage of the electric energy storage unit and taking the voltage as the electric energy collection amount at regular time.

4. The method according to claim 2, **characterized in that**, the micro electric energy is collected at a preset power by the low power consumption collection mode; and
by the high-efficiency collection mode the micro electric energy is collected in a MPPT manner, which comprises: selecting an optimal parameter and optimal power consumption balance voltage point by using MPPT method, and collecting the micro electric energy according to the optimal parameter and the optimal power consumption balance voltage point.

5. The method according to claim 2, **characterized in that**, the step of collecting the micro electric energy through a SOC further comprises:
detecting an input current at regular time, turning off the collection in the case that the input current is equal to zero and starting up the collection in the case that the input current is larger than zero or than a preset threshold value;
wherein the input current is converted from the micro-energy in the environment.

6. The method according to claim 1, **characterized in that**, the method further comprises:
performing voltage reset processing on the micro electric energy to convert unstable micro electric energy into intermittent output energy, after the step of converting the micro-energy in the environment into micro electric energy and before the step of collecting the micro electric energy through a SOC and outputting the micro electric energy to the electric energy storage unit.

7. A micro-energy collection device configured to be connected with an electric energy storage unit, **characterized in that**, the device comprises:
a conversion unit configured to convert micro-energy in an environment into micro electric energy; and
a collection unit configured to collect the micro electric energy through a SOC and output the micro-energy to an electric energy storage unit, wherein the collection unit is connected between the conversion unit and the electric energy storage unit.

8. The method according to claim 7, **characterized in that**, the collection unit comprises:
a model establishing module configured to establish a data model, wherein the data model has a correspondence relationship between an electric energy collection amount and a collection mode;
a timer configured to generate a clock signal; and
an electric energy collection amount detection module configured to proactively detect current electric energy collection amount at regular time according to the clock signal or to be woken up passively to detect the current electric energy collection amount, to obtain a corresponding collection mode by searching in the data model according to the current electric energy collection amount, and to start up the corresponding collection mode to collect micro-energy; wherein the collection mode at least comprises a low power consumption collection mode and a high-efficiency collection mode.

9. The device according to claim 8, **characterized in that**, the electric energy collection amount detection module comprises at least one selected from a group of detection modules including:
a first detection module configured to detect an input current or an input voltage or an input charge at regular time, and to take current input current or current input voltage or current input charge as the electric energy collection amount, wherein the input current or the input voltage or the input charge is converted from the micro-energy in the environment; and
a second detection module configured to detect a voltage of the electric energy storage unit and take the voltage as the electric energy collection amount at regular time.

10. The device according to claim 8, **characterized in that**, by the low power consumption collection mode micro electric energy is collected at a preset power; and
by the high-efficiency collection mode the micro electric energy is collected in a MPPT manner, which comprises: selecting an optimal parameter and optimal power consumption balance voltage point by using MPPT method, and collecting the micro electric energy according to the optimal parameter and the optimal power consumption balance voltage point.

11. The device according to claim 7, wherein the collection unit further comprises:
an input current detection unit configured to detect an input current at regular time, to disconnect the conversion unit with collection unit to turn off the collection in the case that the input current is equal to zero, and to connect the conversion unit with the collection unit to start up the collection in the case that the input current is greater than zero or than a preset threshold value;
wherein the input current is converted from the micro-energy in the environment.

12. The device according to claim 11, wherein a one-way conduction device is connected between the conversion unit and the collection unit to turn off the collection in the case that the input current is equal to zero and to start up the collection in the case that the input current is greater than a preset threshold value; or
as an alternative, the input current is detected by the collection unit at regular time, the collection is turned off in the case that the input current is equal to zero; the collection is started up in the case that the input current is greater than zero or the preset threshold value.

13. The device according to claim 7, wherein the device further comprises:
a voltage reset monitoring unit configured to perform voltage switching processing on the micro electric energy to convert unstable micro electric energy into intermittent output energy, wherein the voltage reset monitoring unit is connected between the conversion unit and the collection unit.

14. The device according to claim 13, wherein the voltage reset monitoring unit comprises:
a voltage reset monitoring chip and a capacitance C1;
an input of the voltage reset monitoring chip is connected with the conversion unit, the input of the voltage reset monitoring chip is grounded through the capacitance C1, and an output of the voltage reset monitoring chip is connected with the collection unit.

15. The device according to claim 8, wherein the electric energy collection amount detection module comprises an MCU and a detection circuit;
the detection circuit comprises:
a first switching transistor, a second switching transistor and an inductor L1;
both a current input of the first switching transistor and a current input of the second switching transistor are connected with a power terminal of the SOC in the MCU, a current output of the first switching transistor is connected with the conversion unit through the inductor L1, a control terminal of the first switching transistor is connected with a first output enable terminal of the SOC in the MCU, and a current output of the second switching transistor is connected with the electric energy storage unit, and a control terminal of the second switching transistor is connected with a second output enable terminal of the SOC in the MCU; or
as an alternative, the detection circuit comprises:
a third switching transistor, a fourth switching transistor, a fifth switching transistor, a capacitance C2 and a capacitance C3;
wherein a current input of the third switching transistor and a current input of the fifth switching transistor are commonly connected with a power terminal of the SOC in the MCU, a current output of the third switching transistor is connected with one end of the capacitance C2, the other end of the capacitance C2 is connected with one end of the capacitance C3, and the other end of the capacitance C3 is connected with the conversion unit; the other end of the capacitance C2 is further connected with a current input of the fourth switching transistor, a current output of the fourth switching transistor is grounded, a current output of the fifth switching transistor is connected with the electric energy storage unit, a control terminal of the third switching transistor is connected with a first output enable terminal of the SOC in the MCU, a control terminal of the fourth switching transistor is connected with a second output enable terminal of the SOC in the MCU, and a control terminal of the fifth switching transistor is connected with a third output enable terminal of the SOC in the MCU.

16. A micro-energy supply device, comprising the micro-energy collection device according to any one of claims 7-15.
